# EUROPÄISCHE PATENTANMELDUNG

(11) **EP 2 369 206 A1**
(43) Veröffentlichungstag der Anmeldung: **28.09.2011**
(21) Anmeldenummer: 11001975.9
(22) Anmeldetag: 10.03.2011
(51) Int. Cl.: F16J 15/32

(54) **Vorrichtung zum Öffnen und/oder Schließen einer Tür**

(30) Priorität: 26.03.2010 DE 102010013072
(71) Anmelder: Dorma GmbH + Co. KG, 58256 Ennepetal (DE)
(72) Erfinder: Wildförster, Thomas, 58332 Schwelm (DE); Salutzki, Thomas, 58456 Witten (DE)

(57) **Zusammenfassung**

Die Erfindung betrifft eine Vorrichtung zum Öffnen und/oder Schließen einer Tür, umfassend ein Gehäuse oder ein Gehäusedeckel (25) oder eine Lagerschale und eine mit der Tür oder einer Zarge kuppelbare Achse (20), die mit einem Kraftspeicher und/oder einer Antriebseinheit zusammen wirkt, wobei die Achse (20) das Gehäuse oder den Gehäusedeckel (25) oder die Lagerschale durchdringt und wobei zwischen Achse und Gehäuse oder Gehäusedeckel oder Lagerschale eine Dichtung (11,12,13,14) angeordnet ist.

Erfindungsgemäß ist vorgesehen, dass die Dichtung mindestens eine Dichtlippe (45) aufweist, die elastisch an der Achse anliegt.

## Beschreibung

Die vorliegende Erfindung betrifft eine Vorrichtung zum Öffnen und/oder Schließen einer Tür gemäß dem Oberbegriff des Anspruch 1.

Bei dieser Art der Türschließer oder Türantriebe wird eine Achse mit der Tür oder der Türzarge über ein Gestänge oder einen Hebel gekuppelt, wobei die Achse das Gehäuse des Türschließers oder des Türantriebes durchdringt. Bei weiteren Ausführungsformen von Türschließern oder Türantrieben durchdringt die Achse einen Gehäusedeckel oder eine Lagerschale. Dabei wirkt auf die Achse die Kraft eines im Gehäuse angeordneten Federspeichers oder eines Antriebes. Die Achse vollführt neben der Rotation auch Schwenkbewegungen, die fluiddicht nach außen hin abzudichten sind.

Der Stand der Technik offenbart Türbetätiger, bei denen O-Ringe als Dichtung eingesetzt werden, um eine Achse zu einem Gehäuse oder einem Gehäusedeckel oder einer Lagerschale eines Türbetätigers abzudichten.

Der Stand der Technik beinhaltet den Nachteil, dass solche O-Ringe bei auftretenden Schwenkbewegungen verschleißanfällig sind, wodurch eine dauerhafte leckagefreie Funktion nicht gewährleistet werden kann. In Folge verlieren diese Türschließer oder Türantriebe Öl, das auf die Benutzer der Tür herunter tropfen kann, die Tür bzw. die Wand verschmutzt und den Türschließer oder Türantrieb funktionsunfähig machen.

Ein weiterer Nachteil besteht darin, dass die O-Ringe keine Verdrehsicherung besitzen, wodurch häufig ein Verdrehen während der Montage des O-Rings auftritt. Im Betrieb des Türbetätigers führt dies zur Fehlfunktion, wodurch der O-Ring nicht leckagefrei ist.

Auch ein Nachteil der im Stand der Technik eingesetzten O-Ringe sind die aufwändig bearbeiteten Oberflächen der O-Ringe, die geschliffen werden, wobei ein eingeschränkter Toleranzbereich bei den O-Ringen vorhanden ist.

Bei O-Ringen ist weiterhin nachteilig, dass sie lediglich geringe Außermittigkeiten zulassen können.

Es ist daher die Aufgabe der vorliegenden Erfindung, eine Vorrichtung zum Öffnen und/oder Schließen einer Tür bereit zu stellen, die zuverlässig und preiswert abgedichtet wird.

Diese Aufgabe wird gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Erfindungsgemäß weist die Dichtung mindestens eine Dichtlippe auf, die elastisch an der Achse anliegt. Damit kann die Dichtung neben der Rotation der Achse auch deren Schwenkbewegungen zuverlässig abdichten.

Dies hat den Vorteil, dass bei Temperaturunterschieden des Fluids und damit verbundene Druckunterschiede innerhalb des Türbetätigers eine Leckagefreiheit zwischen der Achse und dem Gehäuse oder dem Gehäusedeckel oder der Lagerschale des Türbetätigers gewährleistet ist.

Eine weitere bevorzugte Ausführungsform ist, dass die Dichtung bei auftretenden langsamen Schwenkbewegungen der Achse leckagefrei ist. Bei langsamen Schwenkbewegungen der Achse bietet die Dichtung die Sicherheit, leckagefrei zu sein, da sie verschleißarm ist.

Auch von Vorteil ist, dass an der Dichtung eine Schmutzlippe angeordnet ist. Eine solche Dichtung kann bei Türbetätiger zum Einsatz kommen, die in einem Boden montiert sind. Bei der Bodenmontage ist es unumgänglich, dass Schmutz in den Bereich der Achse gelangt, wobei die an der Dichtung angeordnete Schmutzlippe den Schmutz von der Achse sowie von der Dichtlippe und deren Dichtfläche fern hält und sicherstellt, dass die Achse schmutzfrei bleibt, wodurch eine Funktionssicherheit des Türbetätigers gewährleistet ist.

Vorteilhaft ist, dass die Dichtlippe und die Schmutzlippe eine Tasche bilden. Hierdurch wird ein Bereich bereitgestellt, der als Schmierstoffdepot für Schmierstoffe geeignet ist.

Auch von Vorteil ist, dass die Tasche als Aufnahme für Schmierstoff ausgebildet ist. Um die Reibung zwischen der Achse und der Dichtung gering zu halten, kann ein Schmierstoff in den Bereich der Tasche angeordnet werden.

Ebenfalls von Vorteil ist, dass die Dichtlippe von einer ersten Freimachung und der Tasche gebildet wird. Somit ist die Dichtlippe flexibel ausgestaltet, um mögliche Außermittigkeiten zwischen der Achsenmitte und der Bohrungsmitte des Gehäuses, des Gehäusedeckels oder der Lagerschale, in die die Achse eingesetzt wird, ausgleichen zu können. Diese Außermittigkeiten können durch Tolleranzfelder hervorgerufen werden. Ebenso ist es denkbar, dass die Außermittigkeiten zwischen der Achsenmitte und dem Bereich auftritt, in dem die Dichtung in das Gehäuse, den Gehäusedeckel oder die Lagerschale eingelegt wird.

Eine vorteilhafte Ausführungsform ist, dass die Schmutzlippe von einer zweiten Freimachung und der Tasche gebildet wird. Somit ist die Schmutzlippe flexibel ausgestaltet, um sich an die Achse anlehnen zu können. Auch von Vorteil ist, dass die Dichtung auf der gehäuseseitigen Fläche einen Vorsprung aufweist. Bei der Herstellung der Dichtung ist auf einfache Weise ein Vorsprung anzubringen, der bei der Montage der Dichtung in das Gehäuse, den Gehäusedeckel oder der Lagerschale eine klemmende Wirkung erzielt, wodurch Dichtung gehalten wird.

Ebenfalls von Vorteil ist, dass der Vorsprung zum Gehäuse oder zum Gehäusedeckel oder zur Lagerschale hin fluiddicht abdichtet. Hierdurch ist gewährleistet, dass das Fluid bei auftretenden Schwenkbewegungen der Achse leckagefrei zwischen dem Gehäuse, dem Gehäusedeckel oder der Lagerschale und dem Bereich, in dem das Fluid innerhalb des Türbetätigers angeordnet ist, gehalten wird.

Ebenfalls von Vorteil ist, dass die Dichtung eine Radialwellendichtung ist. Eine Radialwellendichtung bietet die Möglichkeit, hohe Innendrücke, die im Inneren des Türbetätigers durch Temperaturschwankungen auftreten können, in Verbindung mit langsamen Schwenkbewegungen der Achse eine Leckagefreiheit zu gewährleisten.

Weiterhin von Vorteil ist, dass die Dichtung spezielle Formen aufweist, wie beispielsweise ein X-Ring. Hierdurch sind spezielle Formgebungen im Bereich des Gehäuses, dem Gehäusedeckel oder der Lagerschale, in dem die Dichtung eingebracht wird, sowie spezielle Formen der Achse mit einer speziell geformten Dichtung zu bestücken, um die Leckagefreiheit zu gewährleisten.

Die Erfindung eines bevorzugten Ausführungsbeispiels wird anhand der nachstehenden Beschreibung und Figuren näher dargestellt.

Es zeigen:
- Figur 1:: eine Explosionszeichnung, bei der der Gehäusedeckel 25, die Dichtung 11, 12, 13, 14, das Lager 30 und die Achse 20 angegeben sind,
- Figur 2:: einen Zusammenbau im Vollschnitt eines Gehäusedeckels 25 mit der Achse 20, die durch ein Lager drehgelagert am Gehäusedeckel 25 angeordnet ist und mit einer Dichtung 11, 12, 13, 14 versehen ist,
- Figur 3:: die Dichtung 11 in einer perspektivischen Ansicht und in einer Seitenansicht, in der eine Schnittangabe A-A angegeben ist, sowie den Vollschnitt A-A mit einer Detailangabe W sowie die Detailansicht W,
- Figur 4:: die Dichtung 12 in einer perspektivischen Ansicht und in einer Seitenansicht, in der eine Schnittangabe B-B angegeben ist, sowie den Vollschnitt B-B mit einer Detailangabe X sowie die Detailansicht X,
- Figur 5:: die Dichtung 13 in einer perspektivischen Ansicht und in einer Seitenansicht, in der eine Schnittangabe C-C angegeben ist, sowie den Vollschnitt C-C mit einer Detailangabe Y sowie die Detailansicht Y,
- Figur 6:: die Dichtung 14 in einer perspektivischen Ansicht und in einer Seitenansicht, in der eine Schnittangabe D-D angegeben ist, sowie den Vollschnitt D-D mit einer Detailangabe Z sowie die Detailansicht Z.

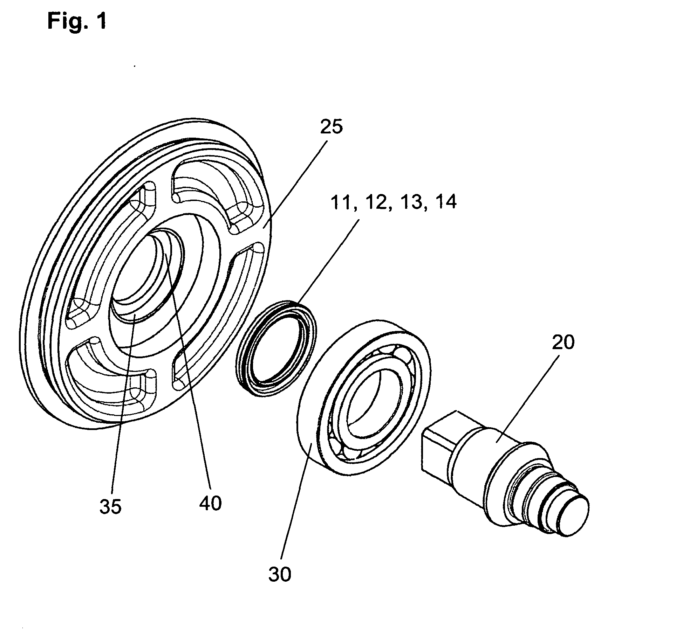

Figur 1 zeigt eine Explosionsdarstellung mit einem Gehäusedeckel 25, der eine Ausnehmung 35 aufweist, in der eine Anlagefläche 40 vorhanden ist, wobei eine Dichtung 11, 12, 13, 14 in die Ausnehmung 35 verdrehsicher eingelegt wird, sowie ein Lager 30, welches axial eine Bohrung aufweist, die die Achse 20 aufnimmt.

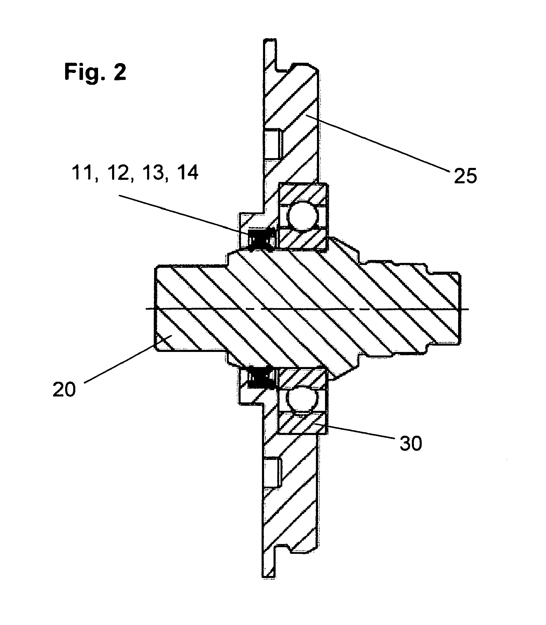

Die Figur 2 zeigt den Zusammenbau der Einzelteile aus der Figur 1 im Vollschnitt. Die Achse 20 ist mit dem Lager drehgelagert verbunden, wobei der Gehäusedeckel 25 das Lager 30 in einer Aussparung aufnimmt und die Dichtung 11, 12, 13, 14 eine fluiddichte Abdichtung zwischen der Achse 20 und dem Gehäusedeckel 25 sicher stellt.

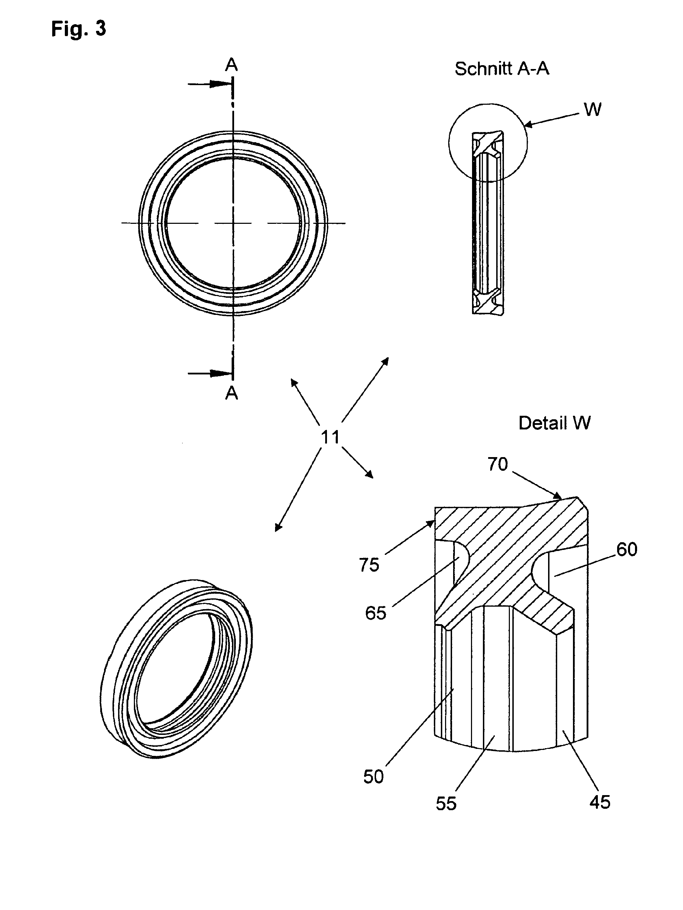

Die Figur 3 zeigt eine Dichtung 11. In der Detailansicht W ist ein Teil der Dichtung 11 dargestellt, bei der die Dichtlippe 45 sowie die Schmutzlippe 50 eine Tasche 55 bilden. Auf einer ersten Seite der Dichtlippe 45 ist die Tasche 55 und auf der zweiten Seite der Dichtlippe 45 ist die erste Freimachung 60 angeordnet, wodurch die Dichtlippe 45 flexibel angeordnet ist. Auf einer ersten Seite der Schmutzlippe 50 ist die Tasche 55 und auf der zweiten Seite der Schmutzlippe 50 ist die zweite Freimachung 65 angeordnet, wodurch die Schmutzlippe 50 flexibel angeordnet ist. Im Bereich der Schmutzlippe ist die Anlagefläche 75 der Dichtung 11 angeordnet, die sich an der Anlagenfläche 40 der Ausnehmung 35 des Gehäusedeckels 25 anlehnt. Der Vorsprung 70 der Dichtung 11 ist an der äußeren Mantelfläche der der Dichtung 11 angeordnet, wobei der Vorsprung 70 die Dichtung 11 während der Montage im Gehäusedeckel 25 klemmt und im zusammengebauten Zustand den Gehäusedeckel 25 leckagefrei abdichtet.

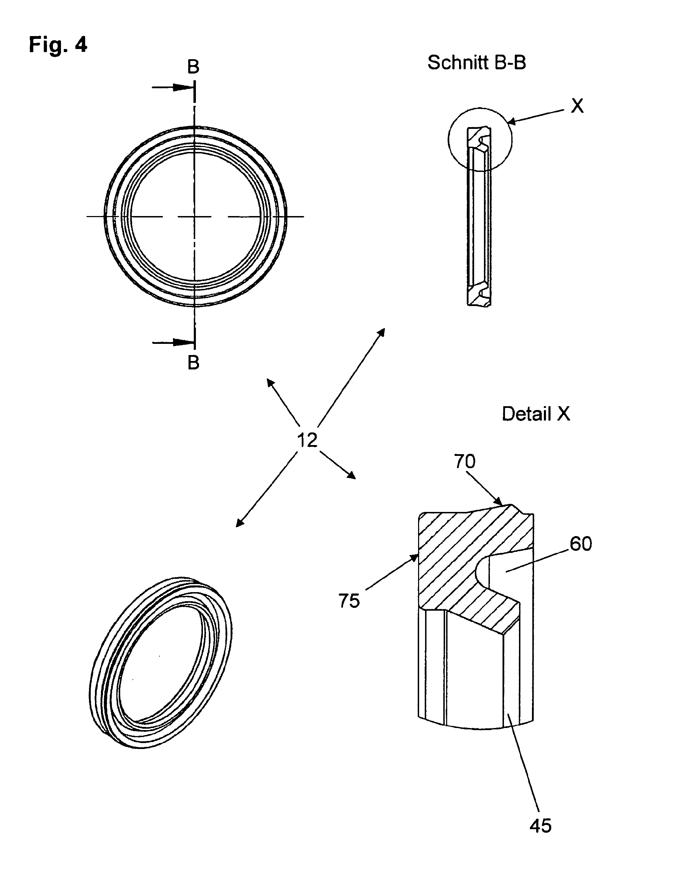

Die Figur 4 zeigt eine Dichtung 12. In der Detailansicht X ist ein Teil der Dichtung 12 dargestellt. Auf einer ersten Seite der Dichtlippe 45 ist eine Freimachung und auf der zweiten Seite der Dichtlippe 45 ist die erste Freimachung 60 angeordnet, wodurch die Dichtlippe 45 flexibel ausgestaltet ist. Die Anlagefläche 75 der Dichtung 12 ist ohne Freimachung vorhanden, wobei sich die Anlagefläche 75 an die Anlagenfläche 40 der Ausnehmung 35 des Gehäusedeckels 25 anlehnt. Der Vorsprung 70 der Dichtung 12 ist an der äußeren Mantelfläche der der Dichtung 12 angeordnet, wobei der Vorsprung 70 die Dichtung 12 während der Montage im Gehäusedeckel 25 klemmt und im zusammengebauten Zustand den Gehäusedeckel 25 leckagefrei abdichtet.

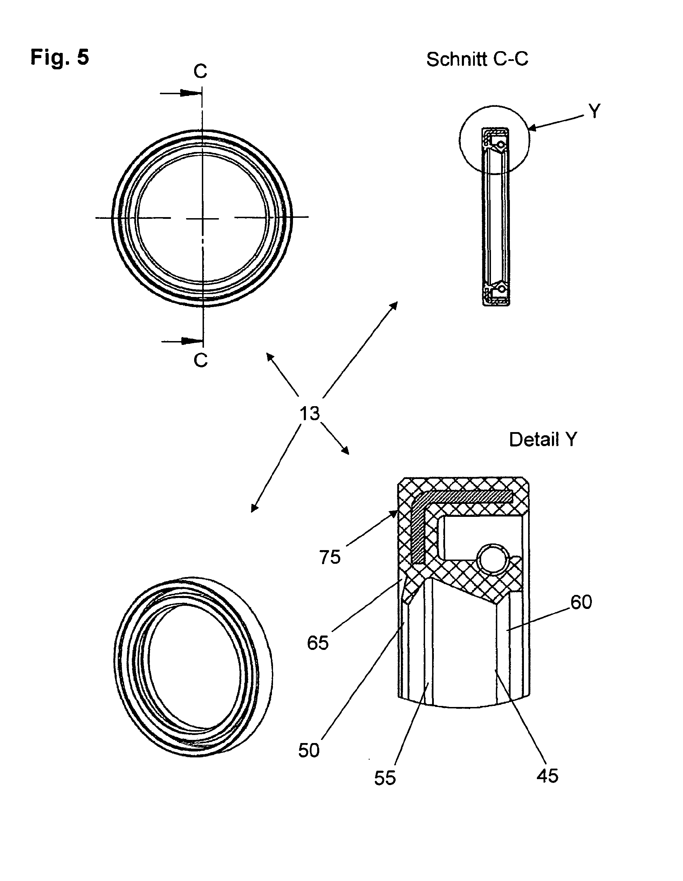

Die Figur 5 zeigt eine Dichtung 13. In der Detailansicht Y ist ein Teil der Dichtung 13 dargestellt, bei der die Dichtlippe 45 sowie die Schmutzlippe 50 eine Tasche 55 bilden. Auf einer ersten Seite der Dichtlippe 45 ist die Tasche 55 und auf der zweiten Seite der Dichtlippe 45 ist die erste Freimachung 60 angeordnet, wodurch die Dichtlippe 45 flexibel angeordnet ist. Auf einer ersten Seite der Schmutzlippe 50 ist die Tasche 55 und auf der zweiten Seite der Schmutzlippe 50 ist die zweite Freimachung 65 angeordnet, wodurch die Schmutzlippe 50 flexibel angeordnet ist. Im Bereich der Schmutzlippe ist die Anlagefläche 75 der Dichtung 13 angeordnet, die sich an der Anlagenfläche 40 der Ausnehmung 35 des Gehäusedeckels 25 anlehnt. Die Dichtung 13 dichtet im zusammengebauten Zustand den Gehäusedeckel 25 leckagefrei ab.

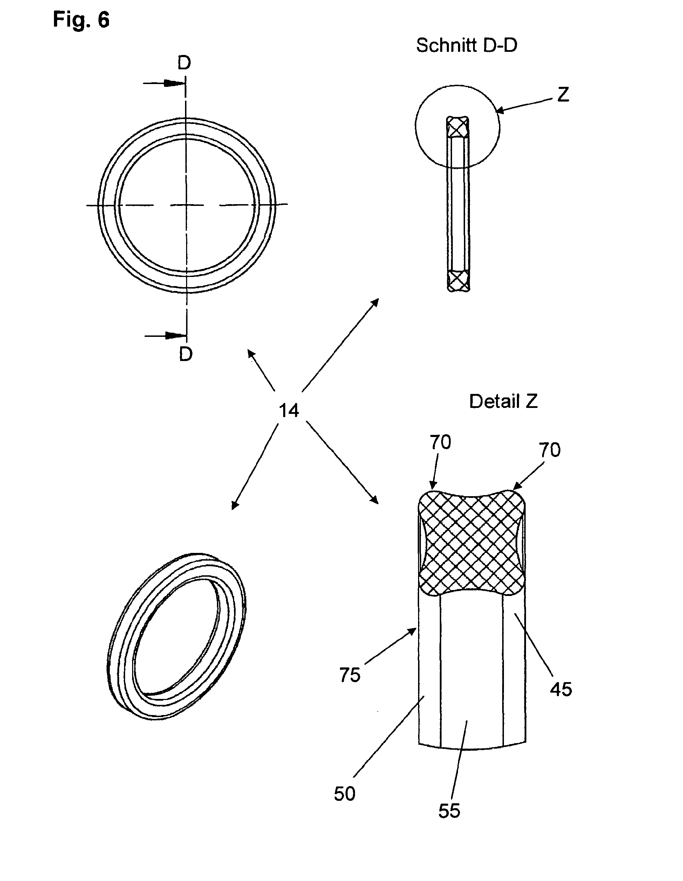

Die Figur 6 zeigt eine Dichtung 14. In der Detailansicht Z ist ein Teil der Dichtung 14 dargestellt, bei der die Dichtlippe 45 und die Schmutzlippe 50 eine Tasche 55 bilden. Die Anlagefläche 75 lehnt sich im zusammengebauten Zustand an die Anlagefläche 40 der Ausnehmung 35 des Gehäusedeckels 25 an, wobei die Vorsprünge 70 die Dichtung 14 während der Montage im Gehäusedeckel 25 klemmt und im zusammengebauten Zustand den Gehäusedeckel 25 leckagefrei abdichtet.

In den Figuren 1 bis 6 wird ein Gehäusedeckel 25 gezeigt, wobei die Anordnung der Dichtung 11, 12, 13, 14 selbstverständlich auch an einem Gehäuse oder einer Lagerschale eines Türbetätigers angeordnet sein kann, wobei das Gehäuse sowie die Lagerschale des Türbetätigers die entsprechenden Ausnehmungen 35 sowie Anlageflächen 40 vorweisen. Bei dieser Ausführungsform werden der Türschließer und der Türantrieb als Türbetätiger bezeichnet.

Der Türbetätiger wird auf vielfache Weise an eine Tür angeordnet, wie beispielsweise als Bodentürbetätiger oder als Obentürbetätiger. Zur besseren Übersicht wird der erfinderische Gegenstand lediglich im dem Bereich des Türbetätigers gezeigt, an dem die Achse 20 an dem Türbetätiger angeordnet ist.

Der Türbetätiger weist im Inneren ein Fluid auf, welches bedingt durch Temperaturschwankungen unterschiedliche Innendrücke besitzt.

Bei Betätigung des Türbetätigers wird über Mittel die Achse 20 beansprucht, wobei die Achse 20 Schwenkbewegungen ausgesetzt wird. Bei den auftretenden Schwenkbewegungen ist zu gewährleisten, dass der Türbetätiger insbesondere bei langsamen Schwenkbewegungen und den unterschiedlichen Innendrücken des Fluids dauerhaft leckagefrei bleibt. Langsame Schwenkbewegungen der Achse 20 treten auf, wenn die Tür, an der der Türbetätiger gekoppelt ist, eine langsame Bewegung in Schließrichtung oder in Öffnungsrichtung durchführt. Die langsame Schwenkbewegung der Achse 20 kann durch unterschiedliche Faktoren hervorgerufen werden, wie beispielsweise geringer Luftzug oder eine bewusste Betätigung einer Person.

Im Zusammengebauten Zustand ist die Dichtung 11, 12, 13, 14 in die Ausnehmung 35 bis zur Anlagefläche 40 des Gehäusedeckels 25 eingelegt, wobei die Anlagefläche 75 der Dichtung 11, 12, 13, 14 an der Anlagefläche 40 anliegt. Hierdurch ist eine verdrehsichere Montage der Dichtung 11, 12, 13, 14 gewährleistet. Der Vorsprung 70, der an der äußeren Mantelfläche der Dichtung 11, 12, 14 angeordnet ist, dichtet den Gehäusedeckel 25 fluiddicht ab.

Die Dichtlippe 45 der Dichtung 11, 12, 13, 14 liegt an der Achse 20 an und dichtet die Achse 20 fluiddicht ab.

Die Schwenkbewegung der Achse 20 wird dadurch ausgeglichen, dass die Dichtlippe 45 der Dichtung 11, 12, 13, 14 flexibel ausgestaltet ist, wobei sie dauerhaft einen fluiddichten Kontakt zur Achse 20 behält. Außermittigkeiten, die durch Toleranzfelder der Achse 20 sowie des Gehäusedeckels 25 hervorgerufen werden können, werden durch die Dichtung 11, 12, 13, 14 ausgeglichen, wodurch eine fluiddichte Leckagefreiheit gewährleistet ist.

Eine bevorzugte Ausführungsform der Dichtung 11, 13, 14 beinhaltet neben der Dichtlippe 45 eine Schmutzlippe 50. Die Schmutzlippe 50 hält Schmutz fern, der anderweitig in den Bereich der Achse 20 eindringen kann, welches zu Beschädigungen der Dichtlippe sowie deren Dichtfläche führt, welches schließlich zu Fehlfunktionen sowie Leckagen des Türbetätigers führen kann. Die Schmutzlippe 50 ist ebenfalls flexibel ausgelegt, um den an der Achse 20 auftretenden Schwenkbewegungen derart entgegenwirken zu können, dass Schmutz aus dem Bereich der Achse 20 fern gehalten wird.

Die Dichtlippe 45 sowie die Schmutzlippe 50 bilden die Tasche 55, die im Zusammenbau als Bereich für Schmierstoff genutzt werden kann, der die auftretenden Bewegungen zwischen der Achse 20 und der Dichtung 11, 12, 13, 14 leichtgängig hält und somit die Reibung zwischen ihnen verringert.

Durch die Verwendung der Dichtung 11, 12, 13, 14 ist eine fluiddichte und leckagefreie Ausführung des Türbetätigers sichergestellt.

### Bezugszeichenliste

- 11, 12, 13, 14: Dichtung
- 20: Achse
- 25: Gehäusedeckel
- 30: Lager
- 35: Ausnehmung
- 40: Anlagefläche
- 45: Dichtlippe
- 50: Schmutzlippe
- 55: Tasche
- 60: erste Freimachung
- 65: zweite Freimachung
- 70: Vorsprung
- 75: Anlagefläche

## Patentansprüche

1. Vorrichtung zum Öffnen und/oder Schließen einer Tür, umfassend ein Gehäuse oder ein Gehäusedeckel (25) oder eine Lagerschale und eine mit der Tür oder einer Zarge kuppelbare Achse (20), die mit einem Kraftspeicher und/oder einer Antriebseinheit zusammen wirkt, wobei die Achse (20) das Gehäuse oder den Gehäusedeckel (25) oder die Lagerschale durchdringt und wobei zwischen Achse (20) und Gehäuse oder Gehäusedeckel (25) oder Lagerschale eine Dichtung angeordnet ist, **dadurch gekennzeichnet, dass** die Dichtung (11, 12, 13, 14) mindestens eine Dichtlippe (45) aufweist, die elastisch an der Achse (20) anliegt.

2. Vorrichtung zum Öffnen und/oder Schließen einer Tür nach Anspruch 1, **dadurch gekennzeichnet, dass** an der Dichtung (11, 13, 14) eine Schmutzlippe (50) angeordnet ist.

3. Vorrichtung zum Öffnen und/oder Schließen einer Tür nach Anspruch 2, **dadurch gekennzeichnet, dass** die Dichtlippe (45) und die Schmutzlippe (50) eine Tasche (55) bilden.

4. Vorrichtung zum Öffnen und/oder Schließen einer Tür nach Anspruch 3, **dadurch gekennzeichnet, dass** die Tasche (55) als Aufnahme für Schmierstoff ausgebildet ist.

5. Vorrichtung zum Öffnen und/oder Schließen einer Tür nach Anspruch 3, **dadurch gekennzeichnet, dass** die Dichtlippe (45) von einer ersten Freimachung (60) und der Tasche (55) gebildet wird.

6. Vorrichtung zum Öffnen und/oder Schließen einer Tür nach Anspruch 2 und 3, **dadurch gekennzeichnet, dass** die Schmutzlippe (50) von einer zweiten Freimachung (65) und der Tasche (55) gebildet wird.

7. Vorrichtung zum Öffnen und/oder Schließen einer Tür nach Anspruch 1, **dadurch gekennzeichnet, dass** die Dichtung (11, 12, 14) auf der gehäuseseitigen Fläche einen Vorsprung (70) aufweist.

8. Vorrichtung zum Öffnen und/oder Schließen einer Tür nach Anspruch 7, **dadurch gekennzeichnet, dass** der Vorsprung (70) zum Gehäuse oder zum Gehäusedeckel (25) oder zur Lagerschale hin fluiddicht abdichtet.

9. Vorrichtung zum Öffnen und/oder Schließen einer Tür nach Anspruch 1, **dadurch gekennzeichnet, dass** die Rotationsdichtung (11, 12, 14) eine Radialwellendichtung (13) ist.

10. Vorrichtung zum Öffnen und/oder Schließen einer Tür nach Anspruch 1, **dadurch gekennzeichnet, dass** die Rotationsdichtung (11, 12, 13) spezielle Formen aufweist, wie beispielsweise ein X-Ring (14).
